(19) Europäisches Patentamt / European Patent Office / Office européen des brevets

(11) **EP 3 786 133 A1**

(12) **EUROPÄISCHE PATENTANMELDUNG**


(43) Veröffentlichungstag:
**03.03.2021 Patentblatt 2021/09**

(21) Anmeldenummer: **19193780.4**

(22) Anmeldetag: **27.08.2019**

(51) Int Cl.:
***C04B 26/14*** *(2006.01)* ***C04B 40/06*** *(2006.01)*
***C08G 59/62*** *(2006.01)* ***C08G 59/68*** *(2006.01)*
***C09J 163/00*** *(2006.01)* ***C04B 111/00*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**



(71) Anmelder: **Hilti Aktiengesellschaft**
**9494 Schaan (LI)**

(72) Erfinder:
- **Behrens, Nicole**
  **81245 München (DE)**
- **Bornschlegl, Alexander**
  **81245 München (DE)**

(74) Vertreter: **Hilti Aktiengesellschaft**
**Corporate Intellectual Property**
**Feldkircherstrasse 100**
**Postfach 333**
**9494 Schaan (LI)**


(54) **MÖRTELMASSE MIT MANNICHBASEN FÜR BEFESTIGUNGSZWECKE MIT VERBESSERTER TEMPERATURFESTIGKEIT**


(57) Die Erfindung betrifft eine Zusammensetzung für eine Mörtelmasse für Befestigungszwecke mit mindestens einer Epoxidharzkomponente (A) und mindestens einer Härterkomponente (B). Die Zusammensetzung umfasst über die Härterkomponente (B) mindestens eine unter Umsetzung ausgewählter Amine erhältliche Mannichbase. Ferner umfasst die erfindungsgemäße Zusammensetzung mindestens ein Salz (S) ausgewählt aus den Salzen der Salpetersäure und den Salzen der Trifluormethansulfonsäure als Beschleuniger. Die Erfindung betrifft ferner die Verwendung der erfindungsgemäßen Zusammensetzung zur chemischen Befestigung von Konstruktionselementen in Bohrlöchern. Der aus der erfindungsgemäßen Zusammensetzung hergestellte chemische Dübel zeichnet sich durch eine verbesserte Temperaturfestigkeit bei hohen Temperaturen, insbesondere bei Temperaturen ≥80 °C, aus.


EP 3 786 133 A1

## Beschreibung

Die Erfindung betrifft eine Zusammensetzung für eine Mörtelmasse für Befestigungszwecke mit mindestens einer Epoxidharzkomponente (A) und mindestens einer Härterkomponente (B). Die Zusammensetzung umfasst über die Härterkomponente (B) mindestens eine unter Umsetzung ausgewählter Amine erhältliche Mannichbase. Ferner umfasst die erfindungsgemäße Zusammensetzung mindestens ein Salz (S) ausgewählt aus den Salzen der Salpetersäure und den Salzen der Trifluormethansulfonsäure als Beschleuniger. Die Erfindung betrifft ferner die Verwendung der erfindungsgemäßen Zusammensetzung zur chemischen Befestigung von Konstruktionselementen in Bohrlöchern. Der aus der erfindungsgemäßen Zusammensetzung hergestellte chemische Dübel zeichnet sich durch eine verbesserte Temperaturfestigkeit bei hohen Temperaturen, insbesondere bei Temperaturen ≥80 °C, aus.

Mehrkomponenten-Mörtelmassen auf der Grundlage von härtbaren Epoxidharzen und Aminhärtern enthaltend Mannichbasen sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet.

Die Aushärtegeschwindigkeit einer Mörtelmasse (härtbaren Masse) zur Herstellung eines chemischen Dübels stellt eines der wesentlichen Merkmale der Mörtelmasse dar. Die Aushärtegeschwindigkeit einer Mörtelmasse ist im Wesentlichen von dem in der Härterkomponente vorhandenen Amin abhängig. Es ist bekannt, dass einige Amine wie beispielsweise Diaminocyclohexan eine sehr langsame Reaktionskinetik aufweisen, aufgrund derer Sie nicht oder nur in einem geringen Maß in Mörtelmassen für die chemische Befestigung zum Einsatz kommen. Eine Beschleunigung der Aushärtezeit ist sinnvoll, um Wartezeiten vor dem nächsten Arbeitsschritt zu verkürzen und somit Zeit und Kosten auf der Baustelle einsparen zu können.

In der WO2014/090382 A1 werden Zusammensetzungen für eine härtbare Masse für Befestigungszwecke beschrieben. Die in dieser Schrift beschriebene Härterkomponente (b) umfasst eine Mannichbasenformulierung, die durch Umsetzung ausgewählter Amine erhältlich ist. Diese ausgewählten Amine sind cycloaliphatische oder heterocycloaliphatische Di- oder Polyamine, bei denen mindestens eine, bevorzugt alle Aminogruppen nicht direkt, sondern über einen Linker über einen Abstand von ein oder mehreren Kohlenstoff- und/oder Heteroatome an den cycloaliphatischen oder heterocycloaliphatischen Kern gebunden. Es wird ausgeführt, dass der Linker zusätzliche Bewegungsfreiheitsgrade ermöglicht, der zu einer verbesserten Reaktivität führt. Die in den Vergleichsbeispielen MB5 und MB10 beschriebenen Mörtelmassen basierend auf einer Mannichbase aus Phenol und Diaminocyclohexan zeigen eine verminderte Verbundspannung, verminderte Auszugsfestigkeit und geringe Glasübergangstemperaturen ($T_g$-Werte) nach einer Aushärtezeit von 24 Stunden bei Raumtemperatur.

Im Laufe ihres Lebenszyklus sind Mörtelmassen, die zur chemischen Befestigung von Konstruktionselementen genutzt werden, einer Vielzahl unterschiedlicher Umwelteinflüsse ausgesetzt. So kann sich der Untergrund (bspw. Beton), in den die Mörtelmasse eingebracht sind, in Abhängigkeit von der Jahreszeit stark erwärmen. Diese hohen Temperaturen wirken sich negativ auf die Verbundspannung des chemischen Dübels aus. In extremen Fällen können diese extrem hohe Temperaturen bzw. große Temperaturschwankungen zum Versagen eines chemischen Dübels führen.

Auch wenn die in der WO2014/090382 A1 beschriebenen Zusammensetzungen sich für Hochtemperaturanwendungen eignen sollen, führen gerade die zuvor beschriebenen zusätzlichen Bewegungsfreiheitsgrade des Aminhärters für verminderte Verbundspannungen und Auszugsfestigkeiten bei hohen Temperaturen, insbesondere bei Temperaturen ≥80 °C.

In der europäischen Patentanmeldung EP 3 480 236 A1 werden Mörtelmassen auf Grundlage von Epoxidharzen und Mannich-Basen beschrieben. Zur Reduktion der Aushärtereaktion wird als Beschleuniger ein Polyphenol aus der Gruppe der Novolakharze eingesetzt wird. Nachteilig ist, dass Novolakharze üblicherweise als Feststoffe vorliegen, die in der Härterzusammensetzung gelöst werden müssen. Ferner müssen die Novolakharze in großen Mengen eingesetzt werden, um eine ausreichende Beschleunigung zu erreichen. Dies führt dazu, dass die entsprechenden Mörtelmassen hohe Viskositäten aufweisen, was zu hohen Auspresskräften bei der Applikation führt.

In der noch nicht veröffentlichen europäischen Patentanmeldung mit der Anmeldenummer 18195422.3 wird eine Härterzusammensetzung beschrieben, die eine Mannichbase umfasst und zur Beschleunigung der Aushärtereaktion mindestens ein Salz (S) aus der Gruppe bestehend aus Salzen der Salpetersäure, Salzen der Salpetrigen Säure, Salzen der Halogene, Salzen der Trifluormethansulfonsäure sowie Kombinationen davon. Die Verwendung der dort beschriebenen Härterzusammensetzung in einer Epoxidharzmasse führt zu einer erheblichen Beschleunigung der Aushärtereaktion.

Aufgabe der vorliegenden Erfindung ist es eine Zusammensetzung für eine Mörtelmasse zur chemischen Befestigung von Konstruktionselemente bereitzustellen, die gegenüber den bekannten Epoxidharzmasse eine verbesserte Temperaturfestigkeit gemessen an der Verbundspannung bei hohen Temperaturen, insbesondere bei 100 °C, aufweist und gleichzeitig Aushärtezeiten aufweist, die zumindest vergleichbar sind mit den Aushärtezeiten der bekannten Mörtelmassen auf Basis von Epoxidharzen und Mannichbasen.

Die der Erfindung zugrundeliegende Aufgabe wird durch Bereitstellung einer Zusammensetzung gemäß Anspruch 1 gelöst. Bevorzugte Ausführungsformen der erfindungsgemäßen Zusammensetzung sind in den Unteransprüchen angegeben, die wahlweise miteinander kombiniert werden können.

Gegenstand der Erfindung ist ferner die Verwendung einer erfindungsgemäßen Zusammensetzung zur chemischen Befestigung von Konstruktionselementen in Bohrlöchern gemäß Anspruch 13.

Gegenstand der Erfindung ist auch die Verwendung einer nachstehend beschriebenen Mannichbase in Kombination mit einem Salz (S) gemäß Anspruch 14 zur chemischen Befestigung von Konstruktionselemente zur Erhöhung der Verbundspannung bei hohen Temperaturen.

Erfindungsgemäß wird eine Zusammensetzung für eine Mörtelmasse für Befestigungszwecke bereitgestellt, die mindestens eine Epoxidharzkomponente (A) und eine Härterkomponente (B) umfasst, wobei die Epoxidharzkomponente (A) mindestens ein härtbares Epoxidharz enthält, die Härterkomponente (B) mindestens eine Mannich-Base und mindestens ein gegenüber Epoxidgruppen reaktives Amin enthält und wobei mindestens ein Salz (S) ausgewählt aus den Salzen der Salpetersäure, den Salzen der Trifluormethansulfonsäure und Kombinationen davon in der Epoxidharzkomponente (A) und/oder in der Härterkomponente (B) enthalten ist. Erfindungsgemäß ist die Mannich-Base erhältlich durch Umsetzung einer aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem ausgewählten Amin, wobei das ausgewählte Amin eine Struktur gemäß Formel (I) aufweist:

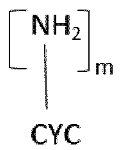

(I)

wobei "CYC" bedeutet a1) ein monocyclischer gesättigter Ring mit 3 bis 12 Ringatomen oder a2) ein bicyclisches gesättigtes Ringsystem mit 3 bis 12 Ringatomen pro Ring, wobei die beiden Ringe des bicyclischen gesättigten Ringsystems über eine aliphatische Gruppe mit 1, 2 oder 3 Kohlenstoffatomen miteinander verbunden sind und jeder der beiden Ringe mindestens eine der m [$NH_2$]-Gruppen trägt, oder a3) ein kondensiertes di- oder polycyclisches gesättigtes Ringsystem mit 6 bis 12 Ringatomen und
m für eine ganze positive Zahl größer oder gleich 2 steht.

Die Verwendung der erfindungsgemäßen Zusammensetzung für eine Mörtelmasse für Befestigungszwecke führt zu einer erheblichen Verbesserung der Temperaturfestigkeit gemessen an der Verbundspannung bei hohen Temperaturen des aus der Zusammensetzung hergestellten chemischen Dübels. Üblicherweise sind die aus der erfindungsgemäßen Zusammensetzung hergestellten chemischen Dübel nach einer Zeit von 24 Stunden belastbar, so dass zum nächsten Arbeitsschritt übergegangen werden kann und unnötige Wartezeiten für die Aushärtereaktion minimiert werden können.

Im Sinne der Erfindung haben die hier und in der nachfolgenden Beschreibung verwendeten Begriffe die folgende Bedeutung:
Unter dem Begriff der "*Verbundspannung* ist die für den Auszug nötige Kraft (die Auszugsfestigkeit) bezogen auf die zugehörige Mantelfläche des Stabes bei einer gegebenen Temperatur zu verstehen. Die Mantelfläche wird in der Praxis aus dem Stabumfang $\pi \cdot d_s$ und der Verbundlänge $l_v$ berechnet.

Unter dem Begriff der "Temperaturfestigkeit" ist im Sinne der vorliegenden Erfindung die die mechanische Stabilität auch bei erhöhter Temperatur, insbesondere bei einer Temperatur $\geq$ 80 °C, insbesondere bei 100 °C zu verstehen. Insbesondere beschreibt die Temperaturfestigkeit im Sinne der vorliegenden Erfindung die ermittelte Verbundspannung eines chemischen Dübels im sog. B3-Auszugstest gemäß EAD330499-00-0601 (Stand July 2017). Hierbei wird die in ein Bohrloch injizierte Mörtelmasse nach Setzen des Ankers für 24 Stunden bei Raumtemperatur (22 °C) ausgehärtet, anschließend für 24 Stunden bei 100 °C gelagert und der Auszugstest bei 100 °C durchgeführt.

*"aliphatische Verbindungen"* sind acyclische oder cyclische, gesättigte oder ungesättigte Kohlenstoffverbindungen, ausgenommen aromatische Verbindungen;
*"aromatische Verbindungen"* sind Verbindungen, die der Hückel (4n+2)-Regel folgen;
"*Amine*" sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)). Im Sinn der vorliegenden Erfindung sind unter dem Begriff der Amine auch die Salze der entsprechenden Amine zusammengefasst,

welche durch den Austausch der ggf. vorhandenen Wasserstoffatome durch Alkali- oder Erdalkalimetallkationen entstehen.

*"Salze (S)"* sind Verbindungen, die aus positiv geladenen Ionen (Kationen) und negativ geladenen Ionen (Anionen) aufgebaut sind. Zwischen diesen Ionen liegen ionische Bindungen vor. Der Ausdruck "*Salze der Salpetersäure"* beschreibt Verbindungen, die von Salpetersäure ($HNO_3$) abgeleitet werden und als Anion ein Nitrat ($NO_3^-$) umfassen. Der Ausdruck "*Salze der Trifluormethansulfonsäure"* beschreibt Verbindungen, die von der Trifluormethansulfonsäure ($CF_3SO_3H$) abgeleitet werden und als Anion ein Triflat ($CF_3SO_3^-$) umfassen. Der Begriff Salz im Sinne der vorliegenden Erfindung umfasst auch die entsprechenden Hydrate der Salze. Die Salze (S), welche als Beschleuniger eingesetzt werden, werden auch als Salze im Sinne der vorliegenden Erfindung bezeichnet.

Die Begriffe *"ein", "eine", "einer"* als Artikel vor einer chemischen Verbindungsklasse bedeuten, dass eine oder mehrere unter diese chemische Verbindungsklasse fallende Verbindungen gemeint sein können. In einer bevorzugten Ausführungsform ist mit diesen Artikeln nur eine einzelne Verbindung gemeint;

Die Begriffe *"mindestens ein", "mindestens eine", "mindestens einer"* bedeuten zahlenmäßig *"ein oder mehrere".* In einer bevorzugten Ausführungsform ist mit diesem Begriff zahlenmäßig "*ein*", "*eine*", "*einer*" gemeint.

Die Begriffe "*enthalten*", *"umfassen"* und *"beinhalten"* bedeuten, dass neben den genannten Bestandteilen noch weitere vorhanden sein können. Diese Begriffe sind einschließlich gemeint und umfassen daher auch *"bestehen aus".* "*Bestehen aus*" ist abschließend gemeint und bedeutet, dass keine weiteren Bestandteile vorhanden sein können. In einer bevorzugten Ausführungsform bedeuten die Begriffe "*enthalten*", *"umfassen"* und *"beinhalten"* den Begriff "*bestehen aus".*

Ein durch Zahlen begrenzter Bereich, z.B. "*von 80°C bis 120°C*" bedeutet, dass die beiden Eckwerte und jeder Wert innerhalb dieses Bereichs einzeln offenbart sind.

**Der Beschleuniger**

Um eine ausreichend schnelle Aushärtereaktion zwischen der Epoxidharzkomponente (A) und der Härterkomponente (B) zu sicherzustellen, enthält die erfindungsgemäße Zusammensetzung in der Epoxidharzkomponente (A) und/oder in der Härterkomponente (B) mindestens ein Salz (S) ausgewählt aus der Gruppe bestehend aus Salzen der Salpetersäure, Salzen der Trifluormethansulfonsäure und Kombinationen davon.

Das Salz (S) kann entweder in der Epoxidharzkomponente (A) oder in der Härterkomponente (B) oder sowohl in der Epoxidharzkomponente (A) als auch in der Härterkomponente (B). Bevorzugt ist das Salz (S) mindestens in der Härterkomponente (B) enthalten.

Das Salz (S) ist erfindungsgemäß mindestens ein Salz ausgewählt aus der Gruppe bestehend aus Salzen der Salpetersäure, Salzen der Trifluormethansulfonsäure sowie Kombinationen davon. Vorzugsweise ist das Salz (S) ausgewählt aus der Gruppe bestehend aus Nitraten ($NO_3^-$), Triflaten ($CF_3SO_3^-$ ) sowie Kombinationen davon.

Als Salze der Salpetersäure eignen sich insbesondere Alkalimetallnitrate, Erdalkalimetallnitrate sowie Mischungen davon. Entsprechende Salze der Salpetersäure sind im Handel käuflich erhältlich. Vorzugsweise werden beispielsweise $Ca(NO_3)_2$ oder $NaNO_3$ verwendet. Es ist auch möglich, dass als Salz (S) eine Lösung eines Salzes in Salpetersäure eingesetzt wird, wie beispielsweise eine Lösung enthaltend $Ca(NO_3)_2/HNO_3$. Zur Herstellung dieser Lösung wird $CaCO_3$ in $HNO_3$ gelöst.

Als Salze der Trifluormethansulfonsäure eignen sich insbesondere Alkalimetalltriflate, Erdalkalimetalltriflate sowie Mischungen davon. Entsprechende Salze der Trifluormethansulfonsäure sind im Handel käuflich erhältlich. Vorzugsweise wird als Salz der Trifluormethansulfonsäure beispielsweise $Ca(CF_3SO_3)_2$ verwendet.

Als Kationen des Salzes (S) kommen vorzugsweise Kationen in Betracht, die ausgewählt werden aus der Gruppe bestehend aus Alkalimetallen, Erdalkalimetallen sowie Mischungen davon. Es ist insbesondere bevorzugt, dass das Kation des Salzes (S) ausgewählt ist aus Natrium oder Calcium oder Mischungen daraus.

Somit eignen sich als Salz (S) insbesondere die folgenden Verbindungen bzw. Komponenten: $Ca(NO_3)_2$ (Calciumnitrat, üblicherweise eingesetzt als $Ca(NO_3)_2$ Tetrahydrat), eine Mischung aus $Ca(NO_3)_2/HNO_3$, $KNO_3$ (Kaliumnitrat), $NaNO_3$ (Natriumnitrat), $Mg(NO_3)_2$ (Magnesiumnitrat, üblicherweise eingesetzt als $Mg(NO_3)_2$ Hexahydrat), $Ca(CF_3SO_3)_2$ (Calciumtriflat), $Mg(CF3SO_3)_2$ (Magnesiumtriflat) sowie $Li(CF_3SO_3)_2$ (Lithiumtriflat).

Die erfindungsgemäße Zusammensetzung kann ein oder mehrere Salze (S) aufweisen. Die Salze können sowohl einzeln als auch im Gemisch von zwei oder mehreren der genannten Salze eingesetzt werden.

Zur Verbesserung der Löslichkeitseigenschaften des Salzes (S) in der Epoxidharzkomponente (A) und/oder der Härterkomponente (B) kann es vorgesehen sein, dass das Salz (S) in einem geeignete Lösemittel gelöst wird und entsprechend als Lösung eingesetzt wird. Hierfür eignen sich beispielsweise organische Lösemittel wie Methanol, Ethanol und Glycerin. Als Lösemittel kann aber auch Wasser verwendet werden, gegebenfalls auch in Mischung mit den vorgenannten organischen Lösemitteln. Zur Herstellung der entsprechenden Salzlösungen wird das Salz (S) in das Lösemittel gegeben und gerührt, vorzugsweise bis zur vollständigen Lösung des Salzes (S).

Das Salz (S) ist vorzugsweise in einem Anteil von 0,1 bis 4 Gew.-% bezogen auf das Gesamtgewicht der

Zusammensetzung in der Epoxidharzkomponente (A) und/oder der Härterkomponente (B) enthalten. Weiter vorzugsweise ist das Salz (S) in einem Anteil von 0,5 bis 3 Gew.-%, bevorzugter in einem Anteil 0,9 bis 2 bezogen auf das Gesamtgewicht der Zusammensetzung in der Epoxidharzkomponente (A) und/oder der Härterkomponente (B) enthalten.

**Die Epoxidharzkomponente (A)**

Als härtbares Epoxidharz in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei EpoxidGruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 180 bis 190 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von $Mn \leq 2000$ g/mol.

Der Anteil des Epoxidharzes an der Epoxidharzkomponente (A) beträgt >0 bis 100 Gew.-%, bevorzugt 10 bis 70 Gew.-% und besonders bevorzugt 30 bis 60 Gew.-%, bezogen auf das Gesamtgewicht der Epoxidharzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropantriglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Die Reaktivverdünner liegen bevorzugt in einer Menge von 0 bis 60 Gew.-% vor, insbesondere von 1 bis 20 Gew.-%, bezogen auf das Gesamtgewicht der Epoxidharzkomponente (A).

Der Anteil der Epoxidharzkomponente (A) an der Gesamtmasse der erfindungsgemäßen Zusammensetzung beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden.

Des Weiteren kann die Epoxidharzkomponente (A) übliche Zusätze enthalten, insbesondere Haftvermittler und Füllstoffe. Diese üblichen Zusätze werden nachstehend für die Härterkomponente (B) näher spezifiziert und können ebenso in den entsprechend angegebenen gewichtsprozentualen Bereichen in der Epoxidharzkomponente (A) enthalten sein, sofern keine unerwünschten Reaktionen mit den Bestandteilen der Epoxidharzkomponente (A) auftreten.

Weitere denkbare Zusätze zur Epoxidharzkomponente (A) sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

**Die Härterkomponente (B)**

Die Härterkomponente (B) umfasst erfindungsgemäß mindestens eine unter Umsetzung ausgewählter Amine erhältliche Mannichbase sowie mindestens ein gegenüber Epoxidgruppen reaktives Amin.

Die in der erfindungsgemäßen Zusammensetzung in der Härterkomponente (B) verwendeten Mannichbasen sind die Reaktionsprodukte eines ausgewählten Amins und eines Aldehyds bzw. einer Aldehydvorstufe mit einer phenolischen Verbindung, die aus der aus Phenol, Brenzkatechin, Resorcin, Hydrochinon, Hydroxyhydrochinon, Phloroglucin, Pyrogallol, o-Kresol, m-Kresol, p-Kresol, Bisphenolen wie Bisphenol F oder Bisphenol A, und Kombinationen davon bestehenden Gruppe ausgewählt ist.

Das ausgewählte Amin zur Herstellung der Mannichbase weist eine Struktur gemäß Formel (I) auf:

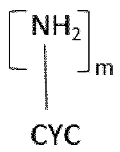

(I)

wobei "CYC" bedeutet a1) ein monocyclischer gesättigter Ring mit 3 bis 12 Ringatomen oder a2) ein bicyclisches gesättigtes Ringsystem mit 3 bis 12 Ringatomen pro Ring, wobei die beiden Ringe des bicyclischen gesättigten Ringsystems über eine aliphatische Gruppe mit 1, 2 oder 3 Kohlenstoffatomen miteinander verbunden sind und jeder der beiden Ringe mindestens eine der m [$NH_2$]-Gruppen trägt, oder a3) ein kondensiertes di- oder polycyclisches gesättigtes Ringsystem mit 6 bis 12 Ringatomen und
m für eine ganze positive Zahl größer oder gleich 2 steht.

Das ausgewählte Amin kann auch in Form eines seiner Salze eingesetzt werden. In diesen Fällen sind eines oder beide Wasserstoffatome der m Aminogruppen [-$NH_2$] durch Alkali und/oder Erdalkalimetalle ausgetauscht. Die Verwendung entsprechender Salze der ausgewählten Amine ermöglicht es die Löslichkeitseigenschaften des ausgewählten Amins einzustellen.

Die ausgewählten Amine zur Herstellung der Mannichbase zeichnen sich dadurch aus, dass sie mindestens zwei direkt an verschiedene Ringatome gebundene $NH_2$-Gruppen aufweisen. Bevorzugt weisen die ausgewählten Amine genau zwei direkt an verschiedene Ringatome gebundene $NH_2$-Gruppen auf. Demzufolge ist in einer bevorzugten Ausführungsform m gleich 2.

Die in den Varianten a1), a2) und a3) beschriebenen Definitionen von "CYC" können wahlweise pro Ring jeweils Methyl- oder Dimethyl-substituiert vorliegen.

Die in den Varianten a1), a2) und a3) beschriebenen Definitionen von "CYC" liegen vorzugsweise aliphatisch aufgebaut vor, d.h. die Ringe und ggf. die Verbindung von zwei Ringen bestehen lediglich aus Kohlenstoff- und Wasserstoffatomen. Es ist jedoch auch möglich, dass die Ringe gemäß den Varianten a1), a2) und a3) Heteroatome aufweisen. In diesen Fällen kann in der Variante a1) der Ring bzw. in den Varianten a2) und a3) das Ringsystem 0 bis 3 Stickstoffatome, 0 bis 3 Sauerstoffatome und 0 bis 1 Schwefelatome aufweisen.

Bevorzugt beträgt die Anzahl der Ringatome der in den Varianten a1), a2) und a3) beschriebenen Definitionen von "CYC" 6 bis 9, besonders bevorzugt 6.

Besonders bevorzugt ist das ausgewählte Amin ausgewählt aus der Gruppe bestehend aus 1,2-Diaminocyclohexan, 1,4-Diaminocyclohexan (1,2-DACH und 1,4-DACH), Bis(4-aminocyclohexyl)methan (PACM), 4,4'-Methylenebis(2-methyl-cyclohexyl-amine) (MACM) und Methylcyclohexyldiamin (MCDA).

Die ausgewählten Amine können sowohl einzeln als auch im Gemisch von zwei oder mehreren der genannten ausgewählten Amine eingesetzt werden.

Zur Bildung der Mannich-Base wird eine phenolische Verbindung mit mindestens einem der vorstehend beschriebenen ausgewählten Amine und einem Aldehyd oder einer Aldehydvorstufe umgesetzt, die durch Zersetzung einen Aldehyd ergibt. Der Aldehyd oder die Aldehydvorstufe kann vorteilhaft als wässrige Lösung, insbesondere bei erhöhter Temperatur von etwa 50°C bis 90°C, zu der Reaktionsmischung zugesetzt und mit dem ausgewählten Amin sowie der phenolischen Verbindung umgesetzt werden.

Als phenolische Verbindung werden bevorzugt Phenol oder ein styrolisiertes Phenol, Resorcin, styrolisiertes Resorcin, Bisphenol A oder Bisphenol F, besonders bevorzugt Phenol oder ein styrolisiertes Phenol, styrolisiertes Resorcin oder Bisphenol A zur Bildung der Mannich-Base verwendet.

Der zur Bildung der Mannich-Base verwendete Aldehyd ist bevorzugt ein aliphatischer Aldehyd, besonders bevorzugt Formaldehyd. Als Aldehyd-Vorstufe können bevorzugt Trioxan oder Paraformaldehyd verwendet werden, die durch Erhitzen in Gegenwart von Wasser zu Formaldehyd zerfallen.

Vorzugsweise liegt das ausgewählte Amin bei der Reaktion mit der phenolischen Verbindung und dem Aldehyd in einem Überschuss vor, so dass die Mannich-Base freie Aminogruppen aufweist.

Zusätzlich zur Mannichbase weist die Härterkomponente (B) mindestens ein gegenüber Epoxidgruppen reaktives Amin auf. Das gegenüber Epoxidharzen reaktive Amin ist vorzugsweise aus der aus aliphatischen, alicyclischen, araliphatischen und aromatischen Aminen bestehenden Gruppe ausgewählt. Das Amin weist bevorzugt im Mittel mindestens zwei an ein Stickstoffatom gebundene reaktive Wasserstoffatome pro Molekül auf. Gegenüber Epoxidgruppen reaktive Amine sind dem Fachmann grundsätzlich bekannt. Bevorzugt ist das Amin ein Polyamin mit mindestens zwei Aminogruppen im Molekül.

Beispiele für gegenüber Epoxidgruppen reaktive geeignete Amin sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1, 6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPDA)), Bis(4-aminocyclohexyl)methan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0$^{2,3}$]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Bevorzugt ist das gegenüber Epoxidgruppen reaktive Amin ausgewählt aus der Gruppe bestehend aus 1,2-Diaminocyclohexan, 1,4-Diaminocyclohexan, Bis(4-aminocyclohexyl)methan (PACM), Methylcyclohexyldiamin (MCDA) und 2,2'-Dimethyl-4,4'-methylenbis(cyclohexylamin) (MACM), 1,3-Cyclohexandimethanamin (1,3-BAC) und 2-Methyl-1,5-diaminopentan (Dytek A). Die gegenüber Epoxidgruppen reaktiven Amine können sowohl einzeln als auch im Gemisch von zwei oder mehreren der genannten Amine eingesetzt werden.

Das gegenüber Epoxidgruppen reaktive Amin und das ausgewählte Amin zur Herstellung der Mannichbase in der Härterkomponente (B) können prinzipiell unabhängig voneinander ausgewählt werden. Es ist jedoch bevorzugt, wenn das ausgewählte Amin zur Herstellung der Mannichbase und das gegenüber Epoxidgruppen reaktive Amin identisch sind. In diesem Fall ist es beispielsweise möglich bei der Herstellung der Mannichbase das ausgewählte Amin in einem solchen Überschuss einzusetzen, dass die so hergestellte Formulierung die gewünschte Mannichbase und nicht reagiertes ausgewähltes Amin enthält, welches dann als gegenüber Epoxidgruppen reaktives Amin zum Einsatz kommt.

Das gegenüber Epoxidgruppen reaktive Amin ist in der Härterkomponente (B) bevorzugt in einem Anteil von 10 bis 90 Gew.-%, besonders bevorzugt 35 bis 70 Gew.-% bezogen auf das Gesamtgewicht der Härterkomponente (B) enthalten.

Des Weiteren enthält die Härterkomponente (B) die mindestens eine Mannich-Base bevorzugt in einem Anteil von 4 bis 70 Gew.-%, besonders bevorzugt 12 bis 65 Gew.-%, jeweils bezogen auf das Gesamtgewicht der Härterkomponente (B).

In einer weiteren Ausführungsform umfasst die Härterkomponente weitere Additive aus der Gruppe der Lösemittel, Co-Beschleuniger, Haftvermittler und anorganischen Füllstoffe. Dies nachfolgend beschriebenen Additive in den entsprechend beschriebenen Mengen können ebenso in der Epoxidharzkomponente (A) enthalten sein mit der Maßgabe, das dort keine unerwünschten (Neben-)Reaktionen auftreten.

Nicht reaktive Verdünnungsmittel (Lösungsmittel) können vorzugsweise in einer Menge bis zu 30 Gew.-% enthalten sein, bezogen auf die das Gesamtgewicht der Härterkomponente (B), beispielsweise von 1 bis 20 Gew.-%. Beispiele für geeignete Lösungsmittel sind Alkohole, wie Methanol, Ethanol oder Glycole, Niederalkylketone wie Aceton, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei $\leq$ 5 Gew.-% bezogen auf das Gesamtgewicht der Härterkomponente (B).

Als Co-Beschleuniger können beispielsweise Benzylalkohol, tertiäre Amine, Imidazole oder tertiäre Aminophenole, Organophosphine, Lewis-Basen oder -Säuren wie Phosphorsäureester, oder Gemische von zwei oder mehr davon

verwendet werden. Bevorzugt sind die Co-Beschleuniger in der Härterkomponente (B) in einem Gewichtsanteil von 0,001 bis 5 Gew.-% enthalten, bezogen auf das Gesamtgewicht der Härterkomponente (B).

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (Evonik, Deutschland).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyldiethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyltrimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben, deren Inhalt hiermit in die vorliegende Anmeldung mit aufgenommen wird.

Der Haftvermittler kann in einer Menge bis zu 10 Gew.-%, bevorzugt 0,1 bis 5 Gew.-%, weiter bevorzugt 1,0 bis 2,5 Gew.-% bezogen auf das Gesamtgewicht der Härterkomponente (B) enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweils käuflich unter der Produktserie Silbond der Firma Quarzwerke erhältlich. Hierbei sind die Produktserien Silbond EST (Epoxysilanmodifiziert) und Silbond AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, ($d_{50}$ = 0,3 $\mu$m) oder Qualitäten wie DAW oder DAM mit den Typenbezeichnungen 45 ($d_{50}$ < 0,44 $\mu$m), 07 ($d_{50}$ > 8,4$\mu$m), 05 ($d_{50}$ < 5,5 $\mu$m), 03 ($d_{50}$ < 4,1 $\mu$m). Weiterhin können die oberflächenbehandelte Fein- und Feinstfüllstoffe vom Typ Aktisil AM (aminosilanbehandelt, $d_{50}$ = 2,2 $\mu$m) und Aktisil EM (epoxysilanbehandelt, $d_{50}$=2,2 $\mu$m) von Hoffman Mineral verwendet werden.

Die anorganischen Füllstoffe können in Form von Sanden, Mehlen oder Formkörpern, vorzugsweise in Form von Fasern oder Kugeln, zugesetzt werden. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Härterkomponente (B).

Die erfindungsgemäße Zusammensetzung umfassend die Epoxidharzkomponente (A) und die Härterkomponente (B) liegt vorzugsweise in Form eines Mehrkomponenten-Kits vor, in welchem die Epoxidharzkomponente (A) und die Härterkomponente (B) reaktionsinhibierend voneinander getrennt in einem oder mehreren Behältern angeordnet sind. Besonders bevorzugt handelt es sich beim Mehrkomponenten-Kit um ein Zweikomponenten-Kit, in welchem die Epoxidharzkomponente (A) und die Härterkomponente (B) in zwei voneinander getrennten Behältern angeordnet sind.

Gegenstand der vorliegenden Erfindung ist daher auch ein Mehrkomponenten-Kit, bevorzugt ein Zweikomponenten-Kit umfassend mindestens eine vorstehend beschriebene Epoxidharzkomponente (A) und mindestens ein vorstehend beschriebene Härterkomponente (B). Die vorstehenden Ausführungen hinsichtlich der Epoxidharzkomponente (A) und der Härterkomponente (B) gelten dementsprechend auch für das Mehrkomponenten-Kit.

Das Mehrkomponenten-Kit liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die Härterkomponente (B) reaktionsinhibierend voneinander getrennt angeordnet sind.

Das Volumenverhältnis der Epoxidharzkomponente (A) zur Härterkomponente (B) liegt vorzugsweise in einem Bereich von 5:1 bis 1:1, besonders bevorzugt in einem Bereich von 3:1 bis 1:1.

Zur bestimmungsgemäßen Anwendung der erfindungsgemäßen Zusammensetzung in Form eines Mehrkomponenten-Kits oder des erfindungsgemäßen Mehrkomponenten-Kits werden die Epoxidharzkomponente (A) und die Härterkomponente(B) aus den getrennten Kammern entleert und in einer geeigneten Vorrichtung, beispielsweise einem Statikmischer oder einem Dissolver, gemischt. Die Mischung aus Epoxidharzkomponente (A) und der Härterkomponente (B) wird danach mittels einer bekannten Injektionsvorrichtung in das zuvor gereinigte Bohrloch eingebracht. Anschließend wird das zu fixierende Bauteil/Konstruktionselement in die entstandene Mörtelmasse eingesetzt und justiert. Die reaktiven

Bestandteile der Härterkomponente (B) reagieren mit den Epoxidharzen der Epoxidharzkomponente (A) unter Polyaddition, sodass die Epoxidharzmasse unter Umgebungsbedingungen innerhalb einer gewünschten Zeit, vorzugsweise innerhalb weniger Stunden, aushärtet.

Die erfindungsgemäße Zusammensetzung enthaltend die Epoxidharzkomponente (A) und die Härterkomponente (B) bzw. das erfindungsgemäße Mehrkomponenten-Kit werden bevorzugt für Bauzwecke eingesetzt. Der Begriff "für Bauzwecke" bedeutet das Baukleben von Beton/Beton, Stahl/Beton, Stahl/Stahl, Holz/Holz, Holz/Beton oder Holz/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Zusammensetzungen und die erfindungsgemäßen Mehrkomponenten-Epoxidharzsysteme zur chemischen Befestigung von Verankerungsmitteln.

Die Epoxidharzkomponente (A) und die Härterkomponente (B) werden bevorzugt in einem Verhältnis gemischt, das entsprechend der EEW- und AHEW-Werte eine ausgeglichene Stöchiometrie ergibt.

Der AHEW-Wert (*amine hydrogen equivalent weight,* H-Äquivalent) gibt die Menge der Härterkomponente (B) an, die 1 mol reaktives H enthält Die Bestimmung des AHEW erfolgt in für den Fachmann bekannter Weise anhand der Formulierung der Reaktionsmischung aus den bekannten H-Äquivalenten der verwendeten Edukte und Rohstoffe, aus denen sie errechnet werden.

Am Beispiel von meta-Xylylendiamin (Mw = 136 g/mol, Funktionalität = 4 eq/mol) ist die Errechnung des AHEW nachfolgend exemplarisch erläutert:

$$\text{Allgemeine Formel: } AHEW = \frac{Mw}{Funktionalität} = \frac{136}{4}\left[\frac{g}{eq}\right] = 34\left[\frac{g}{eq}\right]$$

Die EEW (*epoxide equivalent weight,* Epoxidäquivalentwerte) werden in der Regel von den Herstellern der jeweils verwendeten Epoxidharzkomponenten angegeben oder sie werden nach bekannten Methoden berechnet. Die EEW geben die Menge in g Epoxidharz an, die 1 Mol Epoxidgruppen enthält.

Experimentell wurde die AHEW durch Bestimmung der Glasübergangstemperatur (Tg) einer Mischung aus Epoxidharz (mit bekanntem EEW) und Aminkomponente erhalten. Es wurden dabei die Glasübergangstemperaturen von Epoxidharz/Amin-Mischungen mit unterschiedlichen Verhältnissen bestimmt. Die Probe wurde mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("$T_g2$") besitzt das optimale Verhältnis von Epoxidharz und Amin. Aus dem bekannten EEW und dem optimalen Epoxidharz/Amin-Verhältnis lässt sich der AHEW-Wert berechnen.

Beispiel: EEW = 158 g/mol

Mischung Amin/Epoxidharz mit maximaler $T_{g2}$: 1 g Amin mit 4,65 g Epoxidharz

$$AHEW = \frac{1}{4,65} \cdot 158 = 34\left[\frac{g}{eq}\right]$$

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Zusammensetzung oder ein erfindungsgemäßes Mehrkomponenten-Kit wie zuvor beschrieben verwendet wird. Die erfindungsgemäße Zusammensetzung eignet sich insbesondere zum Baukleben von Beton/Beton, Stahl/Beton, Stahl/Stahl, Holz/Stahl, Holz/Beton oder Holz/Holz oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl, Holz oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient die erfindungsgemäße Zusammensetzung der chemischen Befestigung von Konstruktionselemente und Verankerungsmitteln in Bohrlöchern.

Ein weiterer Gegenstand der Erfindung ist ferner die Verwendung einer erfindungsgemäßen Zusammensetzung oder eines erfindungsgemäßen Mehrkomponenten-Kits zur chemischen Befestigung von Konstruktionselementen in Bohrlöchern.

Gegenstand der Erfindung ist auch die Verwendung einer unter Verwendung der vorstehend genannten ausgewählten Aminen hergestellte Mannichbase in Kombination mit einem Salz (S) in einer Zusammensetzung zur Herstellung einer Mörtelmasse zur Erhöhung der Verbundspannung eines aus der Zusammensetzung hergestellten chemischen Dübels bei hohen Temperaturen, insbesondere bei Temperaturen ≥ 80 °C, insbesondere in einem Temperarturbereich von 80 bis 100 °C.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## AUSFÜHRUNGSBEISPIELE

### Salz (S)

Die in Tabelle 1 beschriebenen Salze (S) werden sowohl in der Epoxidharzkomponente (A) als auch in der Härterkomponente (B) als Beschleuniger eingesetzt.

**Tabelle 1:** Verwendete Salze (S) als Beschleuniger

| Salz (S) | Handelsname | Hersteller |
|---|---|---|
| Calciumnitrat | Calciumnitrat - Tetrahydrat | Sigma-Aldrich |
| Calciumtriflat | Calciumtrifluoromethansulfonat | Sigma-Aldrich |

Das Salz Calciumnitrat wurde als Lösung in Glycerin (1,2,3-Propantriol, CAS-Nr. 56-81-5, Merck) eingesetzt. Zur Herstellung der Calciumnitrat-Lösung wurden 400,0 g Calciumnitrat-Tetrahydrat zu 100,0 g Glycerin gegeben und bei 50 °C bis zur vollständigen Lösung (3 Stunden) gerührt. Die so hergestellte Lösung enthielt 80,0 % Calciumnitrat-Tetrahydrat.

Calciumtriflat wurde als Feststoff im Amin der Härterkomponente gelöst.

### Epoxidharzkomponente (A)

Ausgangsmaterialien

Als Epoxidharze wurden in den Beispielen die im Handel unter den Bezeichnungen Araldite GY 240 und Araldite 282 (Huntsman) erhältlichen Bisphenol A-basierten beziehungsweise Bisphenol F-basierten Epoxidharze verwendet.

Als Reaktivverdünner wurden die im Handel unter den Bezeichnungen Araldite DY-026 und AralditeTM DY-T (Huntsman) erhältlichen 1,4-Butandiol-diglycidylether und Trimethyolpropan-triglycidylether verwendet.

Als Haftvermittler wurde 3-Glycidyloxypropyl-trimethoxysilan erhältlich unter der Bezeichnung Dynalsylan GLYMO™ (Evonik Industries) verwendet.

Die flüssigen Komponenten bis auf die Calciumnitrat-Lösung wurden per Hand vorgemischt. Anschließend wurden als Füllstoff Quarz (Millisil™ W12 der Firma Quarzwerke Frechen) und als Verdicker pyrogene Kieselsäure (Cab-O-Sil™ TS-720 der Firma Cabot Rheinfelden) zugegeben und die Mischung im Dissolver (PC Laborsystem, Volumen 1L) 10 min lang unter bei einem Unterdruck von 80 mbar bei 3500 U/min gerührt. Für die Epoxidharzharzkomponente A1 wurde dann die Calciumnitrat-Lösung zugegeben, untergerührt und im Dissolver für 2 min wie oben beschrieben gerührt.

Die Zusammensetzung der in den Beispielen verwendeten Epoxidharzkomponenten A1 und A2 ist in der nachfolgenden Tabelle 1 angegeben.

**Tabelle 2:** Zusammensetzung der Epoxidharzkomponenten A1 und A2 in Gew.-%

| | A1 | A2 |
|---|---|---|
| 3-Glycidyloxypropyltrimethoxysilan | 2,6 | 2,7 |

(fortgesetzt)

| | A1 | A2 |
|---|---|---|
| Bisphenol A-basiertes Epoxidharz | 30,6 | 31,3 |
| Bisphenol F-basiertes Epoxidharz | 16,5 | 16,9 |
| 1,4-Butanediol-diglycidyl ether | 5,9 | 6,0 |
| Trimethyolpropan-triglycidylether | 5,9 | 6,0 |
| Quarz | 33,6 | 34,4 |
| Kieselsäure | 2,6 | 2,7 |
| Calciumnitrat-Lösung | 2,2 | - |
| **EEW [g/EQ]** | **255** | **255** |

**Härterzusammensetzung (B)**

Die Herstellung der Mannichbasen erfolgte nach dem üblichen dem Fachmann bekannten Verfahren wie beispielsweise beschrieben in der EP 2931782 A1.

Dazu wurden 2 mol des ausgewählten Amins in einem 25 ml Dreihalskolben vorgelegt, welcher mit einem Thermometer, einem Tropftrichter und einer Rührvorrichtung versehen ist. Unter Rühren wurde das vorgelegte ausgewählte Amin mit 1 mol der phenolischen Verbindung versetzt und auf 80 °C aufgeheizt. Nach Erreichen der Temperatur wurden innerhalb von 45 Minuten 0,7 mol einer 37%igen Formaldehydlösung unter starken Rühren hinzugetropft. Nach Beendigung der Zugabe wurde die Temperatur auf 105 °C aufgeheizt. Diese Reaktionsbedingungen wurden für eine Zeitspanne von 120 Minuten beibehalten. Im Anschluss wurde unter vermindertem Druck bei 110 °C überschüssiges Wasser entfernt. Die Temperatur wurde sobald ein Vakuum von 5 mbar erreicht war auf 130 °C erhöht und für 60 Minuten beibehalten. Im Anschluss wurde konnte die so hergestellte Mannichbase in der Härterkomponente eingesetzt werden.

Als ausgewählte Amine zur Herstellung der Mannichbasen wurden 1,2-Diaminocyclohexan (1,2-DCH) vertrieben unter dem Handelsnamen Dytek DCH-99 der Firma Invista sowie Methylcyclohexan-1,3-diamin (MCDA) vertrieben unter dem Handelsname Baxxodur EC 210 der Firma BASF verwendet. Ferner wurden zur Herstellung der Härterkomponente (B) die gegenüber Epoxidgruppen reaktive Amine 1,3-Cyclohexandimethanamin (1,3-BAC) der Firma Itochu sowie 2-Methyl-1,5-diaminopentan (Dytek A) der Firma Invista verwendet.

Als Füllstoff wurde Quarz (Millisil™ W4 der Firma Quarzwerke Frechen) und als Verdicker pyrogene Kieselsäure (Cab-O-Sil™ TS-720 der Firma Cabot Rheinfelden) verwendet.

Zur Herstellung der Härterkomponente (B) wurden die flüssigen Komponenten gemischt. Anschließend wurden Quarzmehl und Kieselsäure zugegeben und im Dissolver (PC Laborsystem, Volumen 1L) bei einem Unterdruck von 80 mbar bei 3500 U/min für 10 min gerührt.

Die Zusammensetzung der so hergestellten Härterkomponente (B) ist in der nachstehenden Tabelle 3 angegeben:

**Tabelle 3:** Härterkomponenten B1 bis B6 in Gew.-%

| | | B1 | B2 | B3 | B4 | B5 | B6 |
|---|---|---|---|---|---|---|---|
| Mannich-Base/ Amin | 1,2-DCH-Phenol basierte Mannich Base/1,2-DCH | 64,9 | - | 40,0 | - | - | - |
| | MCDA-Phenol basierte Mannich Base/MCDA | - | 64,9 | - | 40,0 | 40,0 | 40,0 |
| Amin | 1,3-BAC | - | - | 20,0 | 20,0 | 20,0 | - |
| | Dytek A | - | - | - | - | - | 20,0 |
| Beschleuniger | Calciumnitrat | - | - | 10,0 | 10,0 | - | 10,0 |
| | Calciumtriflat | - | - | - | - | 4,0 | - |
| | Quarz | 32,2 | 32,2 | 27,3 | 27,3 | 33,3 | 27,3 |
| | Verdicker | 2,9 | 2,9 | 2,7 | 2,7 | 2,7 | 2,7 |
| | **AHEW [g/Eq]** | **78** | **80** | **78** | **72** | **72** | **66** |

Vergleichsbeispiele 1 bis 3

Zur Herstellung der Härterkomponente (B) der Vergleichsbeispiele wurden die flüssigen Komponenten gemischt. Anschließend wurden Quarzmehl und Kieselsäure zugegeben und im Dissolver (PC Laborsystem, Volumen 1L) bei einem Unterdruck von 80 mbar bei 3500 U/min für 10 min gerührt.

Die Zusammensetzung der so hergestellten Härterkomponente VB1 bis VB3 ist in der nachstehenden Tabelle 4 angegeben:

**Tabelle 4:** Härterkomponente VB1 bis VB3 in Gew.-%

| | Beispiel | VB1 | VB2 | VB3 |
|---|---|---|---|---|
| Mannich-Base/Amin | 1,2-DCH-Phenol basierte Mannich Base/1,2-DCH | 60,0 | - | - |
| | MCDA-Phenol basierte Mannich Base/MCDA | - | 60,0 | - |
| | mXDA-Resorcin basierte Mannich-Base/mXDA | - | - | 60,0 |
| | Quarz | 37,3 | 37,3 | 37,3 |
| | Verdicker | 2,7 | 2,7 | 2,7 |
| | **AHEW [g/Eq]** | **78** | **80** | **80** |

**Mörtelmassen und Auszugsversuche**

Die unterschiedlichen Epoxidharzkomponenten (A) und die Härterkomponenten (B) bzw. (VB) wurden wie in Tabelle 5 angegeben in einem Speedmixer in einem Verhältnis gemischt, das entsprechend der EEW- und AHEW-Werte eine ausgeglichene Stöchiometrie ergab. Das Gemisch wurde möglichst blasenfrei in eine 1K-Kartusche gefüllt und sofort in das für die Auszugsversuche präparierte Bohrloch injiziert.

Die Auszugsfestigkeit der durch Mischen der Epoxidharzkomponente (A) und Härterkomponenten (B) gemäß den oben angegebenen Beispielen erhaltenen Mörtelmassen wurden unter Verwendung einer hochfesten Ankergewindestange M12 gemäß EAD 330499-00-0601 bestimmt, die in ein hammergebohrtes Bohrloch mit einem Durchmesser von 14 mm und einer Bohrlochtiefe von ca. 61 mm mit der jeweiligen Mörtelmasse in C20/25 Beton eingedübelt wurde. Die Bohrlöcher wurden mit Druckluft (2 x 6 bar), einer Drahtbürste (2 x) und anschließend wieder Druckluft (2 x 6 bar) gereinigt.

Die Bohrlöcher wurden vom Bohrgrund her mit der jeweils zu prüfenden Mörtelmasse zu zwei Dritteln befüllt. Die Gewindestange wurde von Hand eingedrückt. Der Mörtelüberschuss wurde nach dem Aushärten mittels eines Spachtels entfernt.

Die Aushärtezeit bei den R1-Auszugsversuchen betrug 24 Stunden bei 25 °C. Bei den B3-Auszugsversuchen betrug die Aushärtezeit 24 Stunden bei 22 °C, anschließend erfolgte eine Lagerung für 24 Stunden bei 100 °C. Bei den B3-Auszugsversuchen wurden die Auszugstest bei 100 °C durchgeführt.

Die Versagenslast (Verbundspannung) wurde durch zentrisches Ausziehen der Ankergewindestange mit enger Abstützung ermittelt. Die mit den Mörtelmassen unter Verwendung einer Härterkomponeten (B) gemäß den Beispielen 1 bis 6 und den Vergleichsbeispielen 1 bis 3 erhaltenen Verbundspannungen sind der folgenden Tabelle 5 zu entnehmen.

**Tabelle 5:** Bestimmung der Lastwerte der erfindungsgemäßen Beispiele 1 bis 6

| | Beispiele | | | | | |
|---|---|---|---|---|---|---|
| | 1 | 2 | 3 | 4 | 5 | 6 |
| Epoxidharzkomponente | A1 | A1 | A2 | A2 | A2 | A2 |
| Härterkomponente | B1 | B2 | B3 | B4 | B5 | B6 |
| Auszugsversuche | Verbundspannung [N/mm$^2$] | | | | | |
| R1 | 14,3 | 32,5 | 28,6 | 29,8 | 34,4 | 27,0 |
| B3 (100 °C) | 21,6 | 20,0 | 20,3 | 16,2 | 19,1 | 13,1 |

**Tabelle 6:** Bestimmung der Lastwerte der Vergleichsbeispiele 1 bis 3

| | Vergleichsbeispiele | | |
|---|---|---|---|
| | 1 | 2 | 3 |
| Epoxidharzkomponente | A1 | A1 | A2 |
| Härterkomponente | B1 | B2 | B3 |
| Auszugsversuche | Verbundspannung [N/mm$^2$] | | |
| R1 | 7,8 | 9,8 | 30,7 |
| B3 (100 °C) | 19,4 | 19,6 | 6,9 |

Die beiden Vergleichsbeispiele 1 und 2 zeigen niedrige Verbundspannungen bei den R1-Auszugsversuchen. Dies lässt sich durch eine nicht vollständige Aushärtung der Mörtelmasse erklären. Das Vergleichsbeispiel 3 zeigt eine vergleichsweise hohe Verbundspannung im R1-Auszugsversuch, allerdings zeigt die sehr niedrige Verbundspannung im B3-Auszugsversuch die sehr schlecht Temperaturbeständigkeit dieser Mörtelmasse.

Im Gegensatz dazu zeigen alle erfindungsgemäßen Mörtelmassen in den R1-Auszugsversuchen vergleichsweise hohe Verbundspannungen, so dass hier eine ausreichende Aushärtung in einem Zeitfenster von 24 Stunden nachgewiesen werden konnte. Die weiterhin sehr hohen Verbundspannungen im B3-Auszugsversuch zeigen die sehr gute Temperaturfestigkeit der erfindungsgemäßen Mörtelmassen.

## Patentansprüche

**1.** Zusammensetzung für eine Mörtelmasse für Befestigungszwecke enthaltend mindestens eine Epoxidharzkomponente (A) und eine Härterkomponente (B), wobei die Epoxidharzkomponente (A) mindestens ein härtbares Epoxidharz enthält und die Härterkomponente (B) mindestens eine Mannich-Base und mindestens ein gegenüber Epoxidgruppen reaktives Amin enthält, und wobei mindestens ein Salz (S) ausgewählt aus den Salzen der Salpetersäure, den Salzen der Trifluormethansulfonsäure und Kombinationen davon in der Epoxidharzkomponente (A) und/oder in der Härterkomponente (B) enthalten ist, **dadurch gekennzeichnet, dass** die Mannich-Base erhältlich durch Umsetzung einer aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung mit einem Aldehyd oder einer Aldehydvorstufe und einem ausgewählten Amin, wobei das ausgewählte Amin eine Struktur gemäß Formel (I) aufweist:

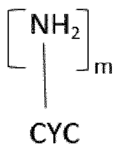

(I)

wobei "CYC" bedeutet a1) ein monocyclischer gesättigter Ring mit 3 bis 12 Ringatomen oder a2) ein bicyclisches gesättigtes Ringsystem mit 3 bis 12 Ringatomen pro Ring, wobei die beiden Ringe des bicyclische gesättigten Ringsystems über eine aliphatische Gruppe mit 1, 2 oder 3 Kohlenstoffatomen miteinander verbunden sind und jeder der beiden Ringe mindestens eine der m [NH2]-Gruppen trägt, oder a3) ein kondensiertes di- oder polycyclisches gesättigtes Ringsystem mit 6 bis 12 Ringatomen und
m für eine ganze positive Zahl größer oder gleich 2 steht.

**2.** Zusammensetzung nach Anspruch 1, **dadurch gekennzeichnet, dass** das Salz (S) ausgewählt ist aus der Gruppe bestehend aus Nitrat ($NO_3^-$), Triflat ($CF_3SO_3^-$) und Kombinationen davon.

**3.** Zusammensetzung nach Anspruch 1 oder 2, **dadurch gekennzeichnet, dass** das Salz (S) ein Kation ausgewählt aus der Gruppe bestehend aus Alkalimetallen, Erdalkalimetallen und Kombinationen davon umfasst.

**4.** Zusammensetzung nach einem der vorhergehenden Ansprüche, **dadurch gekennzeichnet, dass** der Aldehyd ein

aliphatischer Aldehyd ist, bevorzugt Formaldehyd, und dass die Aldehyd-Vorstufe Trioxan oder Paraformaldehyd umfasst.

5. Zusammensetzung nach einem der vorhergehenden Ansprüche, **dadurch gekennzeichnet, dass** die Härterkomponente (B) die mindestens eine Mannich-Base in einem Anteil von 4 bis 70 Gew.-% bezogen auf das Gesamtgewicht der Härterkomponente (B) umfasst.

6. Zusammensetzung nach einem der vorhergehenden Ansprüche, **dadurch gekennzeichnet, dass** das ausgewählte Amin ausgewählt ist aus der Gruppe bestehend aus 1,2-Diaminocyclohexan, 1,4-Diaminocyclohexan, Bis(4-aminocyclohexyl)methan und Methylcyclohexyldiamin.

7. Zusammensetzung nach einem der vorhergehenden Ansprüche, **dadurch gekennzeichnet, dass** zur Herstellung der Mannichbase ein Überschuss an ausgewähltem Amin eingesetzt wird und das ausgewählte Amin und das gegenüber Epoxidgruppen reaktive Amin identisch sind.

8. Zusammensetzung nach Anspruch 7, **dadurch gekennzeichnet, dass** die Zusammensetzung ferner ein weiteres gegenüber Epoxidgruppen reaktives Amin umfasst.

9. Zusammensetzung nach einem der vorhergehenden Ansprüche, **dadurch gekennzeichnet, dass** das Salz (S) in einem Anteil von 0,1 bis 4 Gew.-% bezogen auf das Gesamtgewicht der Zusammensetzung in der Zusammensetzung enthalten ist.

10. Zusammensetzung nach einem der Ansprüche 1 bis 9 in Form eines Mehrkomponentenkits, wobei die Epoxidharzkomponente (A) und die Härterkomponente (B) reaktionsinhibierend voneinander getrennt in einem oder mehreren Behältern angeordnet sind.

11. Zusammensetzung nach Anspruch 10, **dadurch gekennzeichnet, dass** das Mehrkomponenten-Kit ein Zweikomponenten-Kit ist und die Epoxidharzkomponente (A) und die Härterkomponente (B) in zwei getrennten Behältern angeordnet sind.

12. Zusammensetzung nach einem der Ansprüche 1 bis 11, **dadurch gekennzeichnet, dass** das Gewichtsverhältnis der Epoxidharzkomponente (A) und der Härterkomponente (B) in einem Bereich zwischen 5:1 und 1:1 liegt.

13. Verwendung einer Zusammensetzung nach einem der Ansprüche 1 bis 12, insbesondere in Form eines Mehrkomponentenkits, zur chemischen Befestigung von Konstruktionselementen in Bohrlöchern.

14. Verwendung einer wie in einem der Ansprüche 1 bis 12 beschriebenen Mannichbase und eines Salzes (S) zur Herstellung einer Zusammensetzung zum Befestigen von Konstruktionselementen in Bohrlöchern, wobei der aus der Zusammensetzung hergestellte chemische Dübel eine verbesserte Temperaturfestigkeit bei Temperaturen ≥80 °C, aufweist.

Europäisches Patentamt
European Patent Office
Office européen des brevets

# EUROPÄISCHER RECHERCHENBERICHT

Nummer der Anmeldung
EP 19 19 3780

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 2014/090382 A1 (FISCHERWERKE GMBH & CO KG [DE]) 19. Juni 2014 (2014-06-19)<br>* Seite 1, Zeile 1 - Zeile 12 *<br>* Seite 4, Zeile 31 - Seite 5, Zeile 7 *<br>* Seite 5, Zeile 12 - Zeile 13 *<br>* Beispiel 1 *<br>* Ansprüche 14, 15 *<br>----- | 1-14 | INV.<br>C04B26/14<br>C04B40/06<br>C08G59/62<br>C08G59/68<br>C09J163/00<br>C04B111/00 |
| Y | EP 3 260 436 A1 (EVONIK DEGUSSA GMBH [DE]) 27. Dezember 2017 (2017-12-27)<br>* Anspruch 1 *<br>* Absatz [0047] *<br>----- | 1-14 | |
| A | JP 2004 196945 A (ASAHI DENKA KOGYO KK) 15. Juli 2004 (2004-07-15)<br>* das ganze Dokument *<br>----- | 1-14 | |

RECHERCHIERTE SACHGEBIETE (IPC)
C04B
C09J
C08G

Der vorliegende Recherchenbericht wurde für alle Patentansprüche erstellt

1

| Recherchenort | Abschlußdatum der Recherche | Prüfer |
|---|---|---|
| Den Haag | 24. Januar 2020 | Placke, Daniel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 19 19 3780

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2020

| Im Recherchenbericht angeführtes Patentdokument | Datum der Veröffentlichung | Mitglied(er) der Patentfamilie | Datum der Veröffentlichung |
|---|---|---|---|
| WO 2014090382 A1 | 19-06-2014 | BR 112015013087 A2 | 11-07-2017 |
| | | CN 104837887 A | 12-08-2015 |
| | | DE 102013113465 A1 | 12-06-2014 |
| | | DE 202013012362 U1 | 21-06-2016 |
| | | DE 202013012732 U1 | 18-12-2018 |
| | | DE 202013012733 U1 | 12-12-2018 |
| | | EP 2931782 A1 | 21-10-2015 |
| | | ES 2615901 T3 | 08-06-2017 |
| | | JP 6395721 B2 | 26-09-2018 |
| | | JP 2016508162 A | 17-03-2016 |
| | | RU 2015128062 A | 16-01-2017 |
| | | US 2015307702 A1 | 29-10-2015 |
| | | US 2016355437 A1 | 08-12-2016 |
| | | WO 2014090382 A1 | 19-06-2014 |
| EP 3260436 A1 | 27-12-2017 | BR 102017013727 A2 | 02-05-2018 |
| | | CN 107542226 A | 05-01-2018 |
| | | EP 3260436 A1 | 27-12-2017 |
| | | JP 2018020553 A | 08-02-2018 |
| | | KR 20180000690 A | 03-01-2018 |
| | | RU 2017122023 A | 24-12-2018 |
| | | US 2017369372 A1 | 28-12-2017 |
| JP 2004196945 A | 15-07-2004 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014090382 A1
- EP 3480236 A1
- EP 18195422
- EP 3000792 A1
- EP 2931782 A1


### In der Beschreibung aufgeführte Nicht-Patentliteratur


- Gold Book. **A. D. MCNAUGHT ; A. WILKINSON.** IUPAC Compendium of Chemical Terminology. Blackwell Scientific Publications, 1997
- **MICHAEL DORNBUSCH ; ULRICH CHRIST ; ROB RASING.** Epoxidharze. Vincentz Network GmbH & Co KG, 2015